Europäisches Patentamt

European Patent Office

Office européen des brevets

(19)

(11) Veröffentlichungsnummer: **0 294 849**
**A2**

(12) **EUROPÄISCHE PATENTANMELDUNG**

(21) Anmeldenummer: 88109320.7

(22) Anmeldetag: 10.06.88

(51) Int. Cl.4: **H01S 3/03** , **H01S 3/098**

(30) Priorität: 12.06.87 DE 3719744

(43) Veröffentlichungstag der Anmeldung:
14.12.88 Patentblatt 88/50

(84) Benannte Vertragsstaaten:
DE FR GB IT

(71) Anmelder: **Siemens Aktiengesellschaft Berlin
und München**
**Wittelsbacherplatz 2**
**D-8000 München 2(DE)**

(72) Erfinder: **Goretzky, Thomas, Dipl.-Phys.**
**Ahsenerstrasse 22**
**D-4354 Datteln(DE)**
Erfinder: **Schiffner, Gerhard, Prof.-Dr.**
**Eilper Höhe 30**
**D-5802 Wetter 2(DE)**

(54) **Gaslaser mit einem Laserübergang, dessen oberes Niveau das 3s2-Niveau ist.**

(57) Ein Gaslaser, insbesondere HeNe-Laser in einem Laserübergang, dessen oberes Niveau das $3s_2$-Niveau ist, neigt dazu, daß eine relativ langwellige Laserstrahlung, beim HeNe-Laser mit einer Wellenlänge von 3,39μm, angeregt wird. Zur Unterdrückung dieser Strahlung ist gemäß der Erfindung der längenbezogene Querschnitt der Kapillare (1) größer als der zugehörige Strahldurchmesser (d) des Gaußschen Strahles (3) der gewünschten Laserlinie und zu diesem zumindest annähernd proportional und der Durchmesser (D) der Kapillare kleiner als der Durchmesser (d) des Gaußschen Strahles (4) der langwelligen Strahlung.

Die Erfindung ist für HeNe-Laser hoher längenbezogener Ausgangsleistung geeignet.

## FIG 1

EP 0 294 849 A2

## Gaslaser mit einem Laserübergang, dessen oberes Niveau das $3s_2$-Niveau ist.

Die vorliegende Erfindung betrifft einen Laser nach dem Oberbegriff des Patentanspruchs 1. Ein derartiger Laser ist aus der DE-AS 1 174 904 bekannt. Ein derartiger Laser strahlt eine Vielzahl definierter Spektrallinien ab. Bereits in der zitierten DE-AS werden Einrichtungen zur Unterdrückung der unerwünschten Laserlinien vorgesehen. Dadurch wird eine Steigerung der Intensität der Strahlung erreicht.

In der DE-PS 1 962 201 wird als Lochblende zur Unterdrückung der unerwünschten Strahlung eine Einschnürung im Bereich eines Kapillarrohrendes angeordnet. In dieser Patentschrift findet sich auch bereits die Erkenntnis, daß die erstrebte Modenselektion vom Durchmesser der Laserkapillare abhängt, daneben auch von der Resonatorgüte. Gleichzeitig wird die Schwierigkeit aufgezeigt, daß der Kapillarrohr-Durchmesser sehr konstant gehalten werden soll, um den gewünschten Modus der Schwingung selektiv zu verstärken.

Aus dem Aufsatz von Kogelnik und Li: "Laser beams and resonators", IEEE Proc. 54 (1966), No. 10, S.1312 bis 1329 ist es bekannt, daß der Laserstrahl eines Lasers, welcher im Grundmode - schwingt, die Form eines Gaußschen Strahles besitzt, siehe insbesondere S.1315 und 1316, Abschnitt 3.2, und speziell Fig.6. Der genannte Artikel enthält auch eine Methode zur Berechnung des Gaußschen Strahles für beliebige Laserresonatoren.

Die Aufgabe, die der vorliegenden Erfindung zugrundeliegt, besteht in einer Steigerung der Intensität einer Wellenlänge im sichtbaren Bereich durch Unterdrückung der Infrarotstrahlung des Lasers. Insbesondere die Infrarot-Linie von 3,39μm wird im HeNe-Laser extrem stark verstärkt, geringste Reflektionen der Spiegel in diesem Bereich führen zur Resonanz-Anregung dieser Linie und damit zu einer Verminderung der Abstrahlung in den grünen oder roten Laserlinien.

Diese genannte Aufgabe wird bei einem Laser mit den Merkmalen des Oberbegriffs durch die kennzeichnenden Merkmale des Patentanspruchs 1 gelöst.

Durch die Radien und den gegenseitigen Abstand der Resonatorspiegel wird im Laserresonator für die gewünschte Wellenlänge ein Gaußscher Strahl festgelegt, wobei der Strahldurchmesser etwa mit der Quadrat-Wurzel der Wellenlänge ansteigt. Die gewünschte Laserwellenlänge ist beim HeNe-Laser in aller Regel kleiner als die besonders stark verstärkte IR-Linie von 3,39μm. Die IR-Linie besitzt einen bereits erheblich größeren Strahldurchmesser als die gewünschten Linien im sichtbaren Wellenlängenbereich. Durch die erfindungsgemäße Dimensionierung der Kapillare wird die IR-Strahlung, insbesondere die genannte Linie von 3,39μm, in erheblichem Maße gedämpft, die relativ hohen Verluste verhindern schon in Verbindung mit Spiegeln normaler Qualität eine ausreichende Unterdrückung der genannten IR-Linie.

Wählt man, wie aus dem zitierten Stand der Technik bereits zu entnehmen, eine zylindrische Kapillare mit einem kleinen Kapillardurchmesser, in dem eine freie Ausbreitung eines Gaußschen Strahls nicht möglich ist, dann kann sich die Strahlung in Form von Wellenleitermoden ausbreiten. Die Ausbreitung in Form von Wellenleitermoden ist aus Appl.Phys.11,S.1-33 (1976), bekannt, vgl. hierzu insb.S.4 bis 6. Durch die Verwendung von erfindungsgemäßen nichtzzylindrischen Kapillaren wird die Dämpfung dieser Ausbreitungsform erhöht, so daß auch hierdurch kein Anschwingen der genannten IR-Linie ermöglicht wird. Dies erklärt sich für Strahlung, die in die Kapillare vom Ende mit dem größeren Durchmesser her eintritt, dadurch, daß aufgrund der nichtparallelen Wände der Einfallswinkel der Teilstrahlen, aus denen sich der Wellenleitermode zusammensetzt, bei jeder Reflektion kleiner wird. Da nach dem Fresnelschen Gesetz der Reflektionsgrad mit sinkendem Einfallswinkel ebenfalls abnimmt, erhält man so höhere Verluste für die unerwünschte infrarote Strahlung.

Vorteilhaft ist demgemäß ein Gaslaser so ausgebildet, daß der längenbezogene Durchmesser der Kapillare an den Verlauf des Durchmessers des ersten Gaußschen Strahles durch zumindest einen kegelstumpfförmigen Bereich der Innenwand der Kapillare angenähert ist. Diese Annäherung weist die wesentlichen Eigenschaften der Erfindung auf und ergibt bereits eine sehr gute Dämpfung der IR-Linie. Dabei weist die Kapillare vorteilhaft an ihrem beiden Enden kegelstumpfförmige Bereiche auf, deren Öffnungswinkel an den Verlauf des Durchmessers des Strahles angepaßt sind. Besonders wenig Gefahr einer Ausbreitung der Strahlen in Wellenleitermoden ist gegeben, wenn die beiden kegelstumpfförmigen Bereiche unmittelbar aneinander angrenzen. So ergibt sich eine relativ einfach herstellbare Form ohne einen zylindrischen Bereich der Kapillare. Besonders einfach läßt sich eine Annäherung an den ersten Gaußschen Strahl durch Durchmesserstufen an der Innenwand der Kapillare erreichen. Diese lassen sich durch Aneinandersetzung von Kapillarstücken mit unterschiedlichen Innendurchmessern leicht realisieren und optimieren.

Eine Weiterbildung der Dämpfung der Infrarot-Strahlung besteht darin, daß die Innenwand der Kapillare in axialer Richtung örtlich unterschiedliche Winkel zur Kapillarenachse aufweisen. Dies ist vorteilhaft dadurch realisiert, daß die Innenwand der Kapillare aufgerauht ist. Das Aufrauhen erfolgt vorteilhaft durch Ätzen der Kapillareninnenwand mittels Flußsäure. Vorteilhaft können unterschiedliche Winkel der Innenwand zur Kapillarenachse auch durch eine Ausführungsform erreicht werden, bei der die Innenwand der Kapillare einen oder mehrere Bereiche mit örtlich unterschiedlichen Durchmesserwerten enthält. Dies ist vorteilhaft erreicht, indem die Kapillare in axialer Richtung begrenzte Einschnürungen aufweist. Derartige Einschnürungen lassen sich einfach durch eine Verformung der Kapillare erreichen, bei der der gewünschte Durchmesser im Bereich der Einschnürung durch einen in die Kapillare eingeführten Dorn eingestellt wird.

Durch die unterschiedlichen Winkel zwischen der Innenwand der Kapillare und der Kapillarenachse wird ein verminderter Reflexionsgrad und eine erhöhte Winkelstreuung des reflektierten Lichtes erreicht. Beide Effekte bewirken eine Erhöhung der Verluste für die schräg auf die Kapillarenwand auftreffende Strahlung. Die angeregten Wellenleitermoden werden gedämpft und die spontan emittierte Strahlung mit der Wellenlänge $\lambda = 3,39\mu m$ wird zu einem raschen Verlassen des Lasermediums gezwungen, so daß die Besetzungsinversion nicht mehr durch induzierte Emission vermindert werden kann. Insbesondere die Teile der Strahlung, die auf geneigte Flächen der Kapillarenwandung treffen, haben einen relativ kleinen Einfallswinkel, werden nur schwach reflektiert und dementsprechend stark gedämpft.

Eine weitere Möglichkeit, die Infrarotstrahlung zu bedämpfen, besteht darin, daß die Brechzahl der Kapillarenwand von der Innenwand ausgehend in radialer Richtung zunimmt. Schichten mit entsprechenden Eigenschaften sind bekannt. Sie verringern eine Reflexion einer unter großem Einfallswinkel auftreffenden Strahlung erheblich und führen die Strahlung aus der Kapillare ab. Dabei kann die Brechzahländerung kontinuierlich oder auch in Stufen erfolgen. Sie kann auf verschiedene Weise verwirklicht werden, Beispiele hierfür sind in den Figuren näher erläutert.

Der Gaußsche Strahl läßt sich nach der eingangs erwähnten Methode von Kogelnik und Li berechnen. Der Strahldurchmesser ist u.a. von den Krümmungen der Spiegel, deren Abständen und der Wellenlänge der erwünschten Strahlung abhängig. Da die Ausbildung der Spiegel auf maximale Laserleistung hin konzipiert und die Länge der Kapillare häufig festgelegt ist, sich also nicht ohne weiteres auf ein relativ leicht berechenbares konfokales System dimensionieren läßt, wird die folgende Kombination von empirischen und rechnerischen Schritten zur Ermittlung des Verlaufes des Gaußschen Strahles vorgeschlagen:

Eine Spiegelanordnung der im Laser vorgesehenen Art wird aufgebaut. Ein Laserstrahl der vorgegebenen Wellenlänge und mit dem vorgegebenen Durchmesser wird durch den teildurchlässigen Spiegel koaxial zur optischen Achse der Spiegelanordnung eingestrahlt.

Der Taillendurchmesser $w_0$, das heißt der Abstand von der Achse, bei dem gilt: Die elektrische Feldstärke E im Strahl ist gleich 1:e mal elektrische Feldstärke an der Strahlachse, wird gemessen;

Der Minimalabstand $z_{min}$, bei dem der Durchmesser w(z) den Betrag $w_0$ mal Quadrat-Wurzel 2 erreicht, wird gemessen; die Ortskoordinate wird normiert nach der Formel $z_n = z/z_{min}$. Der ortsabhängige Durchmesser des Gaußschen Strahles wird nun nach der Formel berechnet:

$$w^2(Z) = w_0^2(1 + z_n^2).$$

Die Messungen von $w_0$ und $z_{min}$ müssen bei vorgegebener Spiegelanordnung nur für die Wellenlängen der interessierenden Banden durchgeführt werden. Das beschriebene Verfahren läßt sich für alle im Grundmode schwingenden Laserspiegelanordnungen anwenden.

Die Erfindung wird nun anhand von 4 Figuren näher erläutert. Die Figuren zeigen schematisch Profile von erfindungsgemäßen Laserkapillaren, wobei der Maßstab für die Durchmesser der Kapillare und der Gaußschen Strahlen etwa um den Faktor 50 größer gewählt wurde als der Maßstab für die Kapillarlänge.

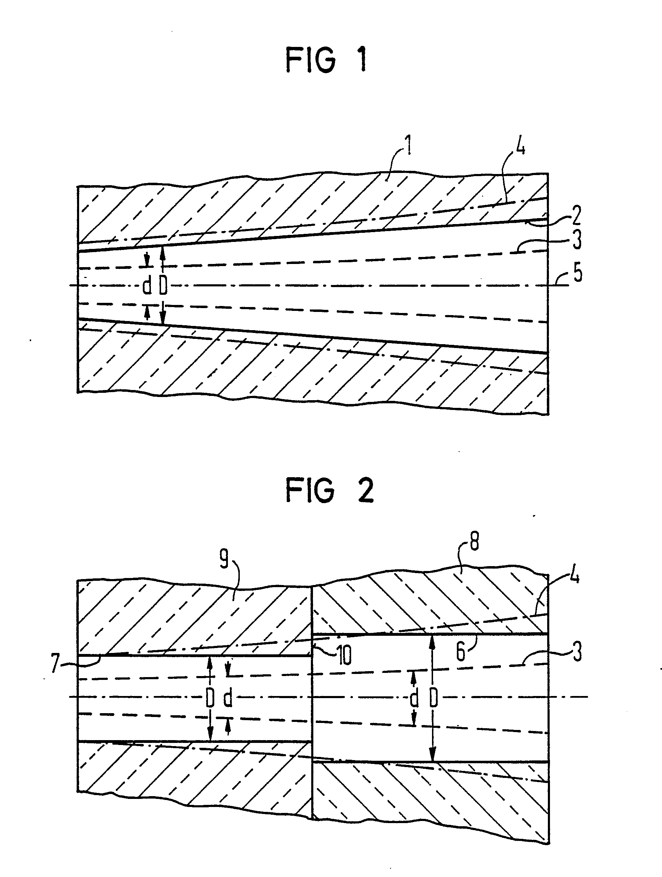

Figur 1 zeigt eine Laserkapillare 1 mit einer kegelstumpfförmigen Innenwand 2. Der Verlauf eines ersten Gaußschen Strahles 3 der gewünschten Wellenlänge und eines zweiten Gaußschen Strahles 4 der zu unterdrückenden langwelligen Strahlung sind eingezeichnet. Die Innenwand 2 hat einen längenbezogenen Durchmesser D, welcher größer ist als der entsprechende längenbezogene Durchmesser d des ersten Gaußschen Strahles 3. Dabei unterschreitet das Verhältnis D/d an keiner Stelle einen vorgegebenen Wert, der bei HeNe-Lasern vorteilhaft bei 1,8 liegt. Dabei hat das Beispiel gemäß Fig. 1 den Vorteil, daß die Messung von D/d an den Stirnflächen der Kapillare genügt, da dieser Wert zwischen den Stirnflächen stets größer ist. Gleichzeitig ist der Durchmesser D kleiner als der zugehörige Durchmesser des zweiten Gaußschen Strahles 4 der unerwünschten Infrarotstrahlung, die bei HeNe-Lasern insbesondere durch die 3,39$\mu m$-Linie dargestellt ist.

Im Beispiel der Fig. 2 ist das Profil der Innenwand der Kapillare durch eine Durchmesserstufe 10 an das Profil des ersten Gaußschen Strahles angenähert. Diese Ausführungsform läßt sich leicht aus Kapillaren 8 und 9 mit unterschiedlichen Durchmessern der Innenwand 6 bzw. 7 zusammensetzen. Bei entsprechender Länge des Lasers bzw. bei einer starken Verbreiterung des ersten Gaußschen Profiles im Randbereich oder bei einem geringen Durchmesserunterschied zwischen dem ersten und dem zweiten Gaußschen Strahl empfiehlt es sich, mehr als eine Durchmesserstufe 10 vorzusehen. Im gezeigten Beispiel genügt eine Durchmesserstufe 10, um das Mindestverhältnis D/d an allen Stellen der Kapillare zu gewährleisten. Zur Unterdrückung der störenden IR-Strahlung genügt es andererseits, wenn der längenbezogene Kapillardurchmesser D über einen Teil der Länge der Kapillaren 8 und 9 kleiner ist als der längenbezogene Durchmesser des zweiten Gaußschen Strahles 4. Daher wurde die Stufe 10 so gelegt, daß sie den zweiten Gaußschen Strahl 4 schneidet.

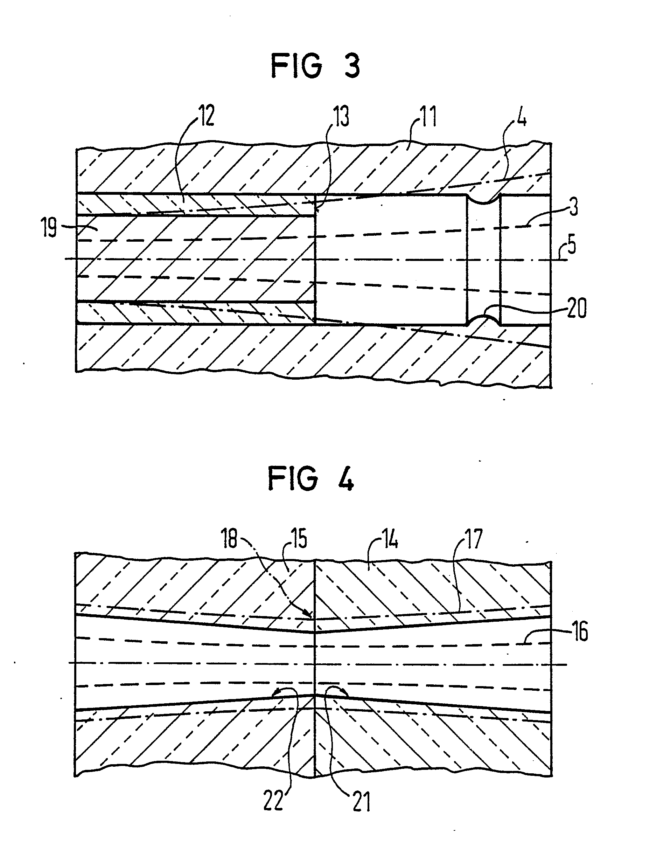

Das Beispiel der Fig. 3 entspricht weitgehend dem von Fig. 2. Dort wurden jedoch anstelle der stirnseitig aneinander grenzenden Kapillaren 8 und 9 eine durchgehende Kapillare 11 mit zylindrischem Querschnitt gewählt, in die eine Kapillare 12 eingeschoben ist. Die Stirnfläche 13 der eingeschobenen Kapillare 12 bildet eine Durchmesserstufe, durch die der Durchmesser der Kapilare 11 an den ersten Gaußschen Strahl 3 angepaßt ist. Die Innenwand 19 der eingeschobenen Kapillare 12 ist aufgeraucht, z.B. durch Einwirkung von Flußsäure. Die Innenwand der durchgehenden Kapillare 11 enthält einen Bereich 20 mit örtlich unterschiedlichen Durchmesserwerten in Form einer Wulst. Diese beiden Merkmale ergeben eine Steuerung der Reflexionswinkel für schräg einfallende Strahlung, eine. stellenweise geringe Reflexion infolge relativ kleiner Einfallswinkel und somit eine erhebliche Dämpfung der schräg unter großem Einfallswinkel ankommenden Strahlung. Daduch wird eine Wellenleitung der langwelligen Strahlung unterbunden, die im ersten Gaußschen Strahl 3 konzentrierte erwünschte Strahlung aber nicht geschwächt.

Fig. 4 zeigt eine Ausführungsform, in der ein erster Gaußscher Strahl 16 und ein zweiter Gaußscher Strahl 17 von einer Taille 18 ausgehend auf beiden Seiten symmetrsich zunehmen. Dementsprechend wurden zwei Kapillaren 14 und 15 eingesetzt, die jeweils eine konische Innenwand 17 bzw.18 besitzen. Die Kapilaren 14 und 15 sind untereinander gleichgestaltet und spiegelsymmetrisch angeordnet. Diese Ausführungsform ermöglicht eine besonders präzise Anpassung der Kapillare an den Gaußschen Strahl.

**Ansprüche**

1. Gaslaser mit einer Laserkapillare und zwei Laserspiegeln, von denen zumindest einer konkav gewölbt ist, welcher Einrichtungen zur Unterdrückung einer relativ langwelligen Strahlung hoher Verstärkung erhält, **dadurch gekennzeichnet,** daß die Laserspiegel und die Kapillare so dimensioniert sind, daß die gewünschte Laserlinie einen ersten Gaußschen Strahl bildet, daß der längenbezogene Durchmesser der Kapillare größer ist als der zugehörige Strahldurchmesser des Gaußschen Strahles und gleichzeitig zumindest in einem Teil der Kapillare kleiner als der zugehörige längenbezogene Durchmesser eines zweiten Gaußschen Strahles, den die relativ langwellige Strahlung bildet und daß der Duchmesser der Kapillare zum zugehörigen Durchmesser des ersten Gaußschen Strahles zumindest annähernd proportional ist.

2. Gaslaser nach Anspruch 1, **dadurch ge- kennzeichnet,** daß der längenbezogene Durch- messer der Kapillare an den Verlauf des Durchmessers des ersten Gaußschen Strahles durch zumindest einen kegelstumpfförmigen Bereich der Innenwand der Kapillare angenähert ist.

3. Gaslaser nach Anspruch 2, **dadurch gekennkennzeichnet,** daß die Kapillare an ihren beiden Enden kegelstumpfförmige Bereiche aufweist, deren Öffnungswinkel an den Verlauf des ersten Gaußschen Strahles angepaßt sind.

4. Gaslaser nach Anspruch 3, **dadurch ge- kennzeichnet,** daß die beiden kegelstumpffförmi- gen Bereiche unmittelbar aneinander angrenzen.

5. Gaslaser nach Anspruch 1, dadurch **gekennzeichnet,** daß daß der längenbezogene Durchmesser der Kapillare durch eine oder mehrere Durchmesserstufen zum Durchmesser des ersten Gaußschen Strahles annähernd proportional gestaltet ist.

6. Gaslaser insbesondere nach Anspruch 1, **dadurch gekennzeichnet,** daß die Innenwand der Kapillare in axialer Richtung örtlich unterschiedliche Winkel zur Kapillarenachse aufweist.

7. Gaslaser nach Anspruch 6, **dadurch gekennzeichnet,** daß die Innenwand der Kapilare aufgerauht ist.

8. Gaslaser nach Anspruch 6, **dadurch gekennzeichnet,** daß die Innenwand der Kapillare einen oder mehrere Bereiche mit örtlich unterschiedlichen Durchmesserwerten aufweist.

9. Gaslaser nach Anspruch 8, **dadurch gekennzeichnet,** daß die Kapillare in axialer Richtung begrenzte Einschnürungen aufweist.

10. Gaslaser insbesondere nach Anspruch 1, **dadurch gekennzeichnet,** daß die Brechzahl der Kapillarenwand von der Innenwand ausgehend in radialer Richtung zunimmt.

11. Gaslaser nach Anspruch 1,**dadurch gekennzeichnet,** daß die Innenwand der Kapillare an keiner Stelle einen in Anteilen vom Durchmesser des ersten Gaußschen Strahles definierten Abstand von diesem unterschreitet.

# FIG 1

# FIG 2

# FIG 3

# FIG 4